(19)

Europäisches
Patentamt
European
Patent Office
Office européen
des brevets

(11) **EP 2 178 326 B1**

(12) **EUROPEAN PATENT SPECIFICATION**

(45) Date of publication and mention
of the grant of the patent:
**26.12.2012 Bulletin 2012/52**

(51) Int Cl.:
*H04W 28/16* (2009.01)

(21) Application number: **09173359.2**

(22) Date of filing: **16.10.2009**

(54) **Method for assigning bandwidth in the call admission control of Iub interface**

Verfahren zur Bandbreitenzuweisung in der Anrufannahmesteuerung einer Iub-Schnittstelle

Procédé pour l'attribution d'une bande passante au contrôle d'admission d'appel d'une interface Iub

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **16.10.2008 ES 200802922**

(43) Date of publication of application:
**21.04.2010 Bulletin 2010/16**

(73) Proprietors:
• **Vodafone Group PLC
Newbury
Berkshire RG14 2FN (GB)**
• **Vodafone España, S.A.
28108 Alcobendas (ES)**

(72) Inventors:
• **Dominguez Romero, Francisco
28050, Madrid (ES)**
• **Zas Couce, Luis
28050, Madrid (ES)**
• **Perez de la Rosa, Jose Angel
28050, Madrid (ES)**

(74) Representative: **Keston, David Arthur
Vodafone Group Services Ltd.
Group Legal (Patents)
Vodafone House
The Connection
Newbury
Berkshire RG14 2FN (GB)**

(56) References cited:
**WO-A-2008/066429      US-A1- 2005 281 244
US-A1- 2006 140 133      US-B1- 6 233 223
US-B1- 6 909 690**

• **"Universal Mobile Telecommunications System
(UMTS); UTRAN Iub Interface: general aspects
and principles (3GPP TS 25.430 version 7.5.0
Release 7); ETSI TS 125 430" ETSI STANDARDS,
LIS, SOPHIA ANTIPOLIS CEDEX, FRANCE, vol. 3-
R3, no. V7.5.0, 1 October 2007 (2007-10-01),
XP014040053 ISSN: 0000-0001**
• **"Universal Mobile Telecommunications System
(UMTS); UTRAN Iur and Iub interface data
transport and transport signalling for DCH data
streams (3GPP TS 25.426 version 7.1.0 Release
7); ETSI TS 125 426" ETSI STANDARDS, LIS,
SOPHIA ANTIPOLIS CEDEX, FRANCE, vol. 3-R3,
no. V7.1.0, 1 June 2006 (2006-06-01),
XP014034332 ISSN: 0000-0001**
• **"Universal Mobile Telecommunications System
(UMTS); Iub/Iur congestion control (3GPP TR
25.902 version 7.1.0 Release 7); ETSI TR 125 902"
ETSI STANDARDS, LIS, SOPHIA ANTIPOLIS
CEDEX, FRANCE, vol. 3-R3, no. V7.1.0, 1 March
2007 (2007-03-01), XP014037494 ISSN: 0000-0001**

**Description**

<u>Field of the invention</u>

The present invention lies in the field of mobile communications, and more specifically in providing a set of techniques to optimize the Call Admission Control algorithms for the Iub interface, increasing the efficiency of the mobile network.

<u>Background of the invention</u>

In a mobile telecommunication system, several interfaces are defined to interconnect the different nodes of the system. In the case of the UMTS standards, the Iub interface is defined to interconnect the Radio Network Controller (RNC) and the Nodes B (the Base Transceiver Station in UMTS).

In the current 3G networks, the Call Admission Control algorithms for the Iub interface are linear. That means that with every user, there is a reservation done, always with the same value. The problem with the current algorithm is that there are efficiency losses because when there are many users, there is a statistic multiplexing gain, as there are some interval transmitting some users and other interval transmitting other users. So the total needed bandwidth is not the sum of the bandwidth needed per user.

In order to solve this problem, we propose to have a logarithmic distribution function, in this way, when the number of users is low, then more bandwidth is reserved, and when there are many users, the incremental reserved bandwidth is decreased. In order to have a simplified implementation, minimum parameters are needed and therefore maximum automation is achieved with the consequent saving by having this implementation in addition to the ones achieved due to the statistical multiplexing gain performed at this level.

The benefit of the present invention also includes the possibility to have better dimensioning of the BW of the Iub and an easy management of the Transport Resources. It will not be needed so many expansions of the Iub which will produce less capital expenditure (CAPEX) and operational expenditure (OPEX) as well as operational costs to the mobile network operator.

A document produced by the European Telecommunications Standards Institute ("Universal Mobile Telecommunications Systems (UMTS); UTRAN Iub interface: general aspects and principals (3GPP TS 25.430 version 7.5.0 Release 7)") describes the general principals and standards to be applied to an Iub interface.

US patent no. US 6233223 B1 describes an admission control for a communications link. The system maintains a record at the end of each link of the channels of the link that are free. Bandwidth thresholds are determined and used to regulate requests for admission or changes to the link.

US patent no. US 6909690 B1 describes a communication hub that controls access to a communication network over a communication path. A call admission block is configured to control access based on the silence suppression gain for an incoming call.

<u>Summary of the invention</u>

The invention relates to a method for assigning bandwidth in the Call Admission Control of Iub interface according to claim 1. Preferred embodiments of the method are defined in the dependent claims.

The method comprises assigning a total bandwidth reservation according to a non-linear function dependent on the number of users N. The method can be applied either to dedicated channels (PS DCH) or enhanced dedicated channels (E-DCH or commonly called HSUPA, High Speed Uplink Packet Access), in which there is a dedicated channel for each user, and the total bandwidth reservation corresponds to the bandwidth reserved for the whole set of PS DCH or E-DCH; or it can be applied to a channel shared by the N users, in which the total bandwidth reservation corresponds to the reserved bandwidth for said shared channel. The channel shared by the users can be an HSDPA (High Speed Downlink Packet Access) channel.

The non-linear function can be, in a preferred embodiment, a logarithmic function. The logarithmic function used is the following:

$$\mathrm{Re}\,served\_BW = One\_user\_BWres * \log(N^{slopeFactor} + 9)$$

where:

- *Reserved_BW* is the total bandwidth reservation for the shared channel or the whole set of dedicated channels PS DCH or E-DCH;

- *One_user_BWres* is the bandwidth reservation when there is only one user in the system;
- *N* is the number of users;
- *slopeFactor* is a factor to control the incremental reservation as long as more users enters in the system.

The non-linear function can also correspond, in another embodiment, to a table which relates the number of users with the total bandwidth reserved.

Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:

Figure 1 shows a linear distribution function for the Call Admission Control algorithm, according to the prior art, that relates linearly the number of connections to the reserved capacity for the HSDPA channel (the sum of the HSDPA connections).

Figures 2A and 2B shows a logarithmic distribution function for the Call Admission Control algorithm, proposed in the present invention, for PS DCH and HSDPA channel, respectively.

Figure 3 shows, in another embodiment of the present invention, a table relating the number of users with the total bandwidth reserved (for PS DCH and HSDPA channel).

Detailed description of the preferred embodiments

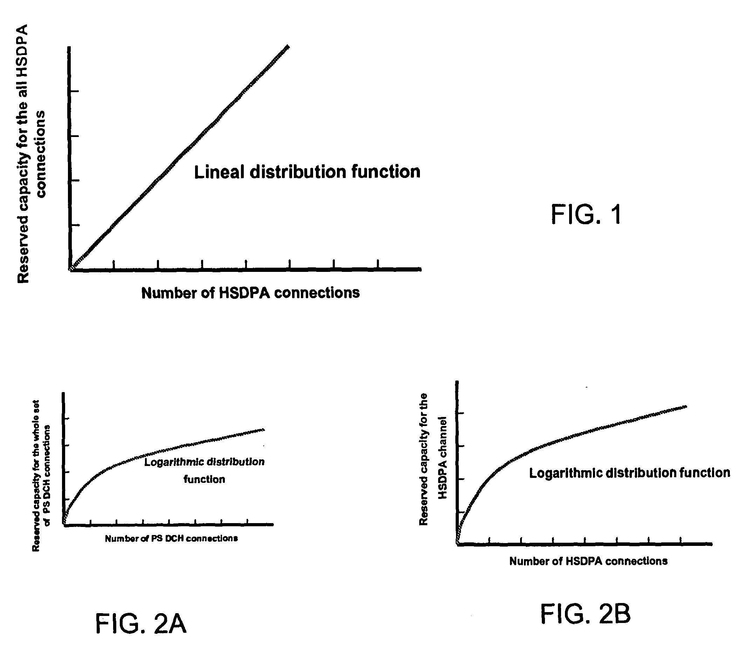

In the current 3G networks, the Call Admission Control algorithms for the Iub interface are linear, as shown in **Figure 1**, so for every new user there is a reservation done, always with the same value. In the horizontal axis is represented the number of HDSPA connections, whereas in the vertical axis is represented the reserved capacity for the HSDPA channel, which is the sum of the HSDPA connected users.

In order to solve the problem commented above, a function dependent on the number of users which adapts better to the real used bandwidth will be used. In particular, the present invention uses a non-linear function of reservation depending on the number of users. Two algorithms will run in parallel, one for PS (Packet Switched) DCH (Dedicated Channel) of Release 99, and another for HSDPA (High Speed Downlink Packet Access) channel, both are used for transmitting/receiving data packets.

In order to have a simplified implementation, minimum parameters are needed and therefore maximum automation is achieved with the consequent savings by having this implementation in addition to the ones achieved due to the statistical multiplexing gain performed at this level.

A first embodiment of the present invention is a logarithmic distribution function, shown in **Figures 2A** (for PS DCH, although it could be applied to E-DCH or HSUPA in the same way) and **2B** (for HSDPA channel). This way, when the number of users is low more bandwidth is reserved (increasing this way the quality of service for these users), and when there are many users, the incremental reserved bandwidth is decreased (avoiding collapsing the network and taking benefit of the statistical multiplexing gain).

So, the preferred implementation of the algorithm should be the next:

- 0 users, 0 Kbps reserved.
- If there is more than 1 user connected:

$$\mathrm{Re}\,served\_BW = One\_user\_BWres * \log(N^{slopeFactor} + 9)$$

where:

- *Reserved_BW* is the total bandwidth reservation for the HSDPA channel or the sum of the PS DCH channels in Kbps.
- *One_user BWres* is the bandwidth reservation when there is one user in the system.
- *N* is the number of users.
- *slopeFactor* is a factor to control the incremental reservation as long as more users enters in the system.

These parameters have to be different for PS R99 DCH and for HSDPA to configure accordingly with the traffic necessities.

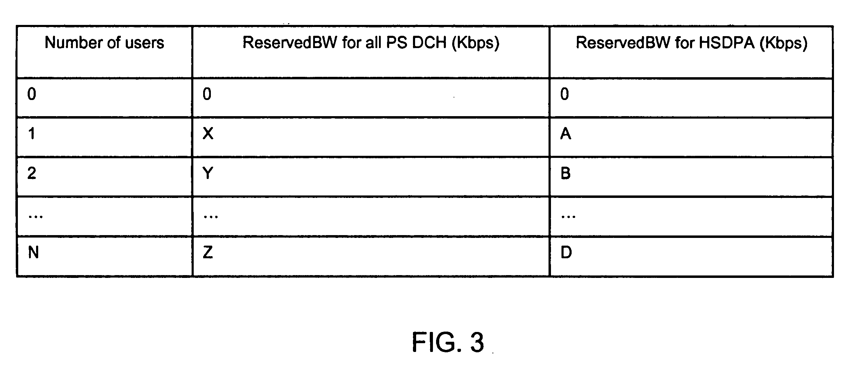

Another embodiment would be to have a table with the BW reserved dependent on the number of users in the system, as shown in **Figure 3**. It can be filled with data obtained from empirical data analysis.

## Claims

1. Method for assigning bandwidth in the Call Admission Control of Iub interface, comprising assigning a total reserved bandwidth according a non-linear function dependent on the number of users N, **characterised in that** the non-linear function is a logarithmic function.

2. Method for assigning bandwidth in the Call Admission Control of Iub interface according to claim 1, **characterized in that** the logarithmic function used is the following:

$$\mathrm{Reserved\_BW = One\_user\_BWres * log}(N^{slopeFactor}+9)$$

where:

- *Reserved_BW* is the total reserved bandwidth;
- *One_user_BWres* is the reserved bandwidth when there is only one user in the system;
- *N* is the number of users;
- *slopeFactor* is a factor to control the incremental reservation as long as more users enters in the system.

3. Method for assigning bandwidth in the Call Admission Control of Iub interface according to claim 1, **characterized in that** the non-linear function corresponds to a table which relates the number of users with the total bandwidth reserved.

4. Method for assigning bandwidth in the Call Admission Control of Iub interface according to any of previous claims, **characterized in that** it is applied to PS DCH, a pocket switched dedicated channel for each user, in which the total reserved bandwidth corresponds to the bandwidth reserved for the whole set of PS DCH.

5. Method for assigning bandwidth in the Call Admission Control of Iub interface according to any of claims 1-3, **characterized in that** it is applied to E-DCH, an enhanced dedicated channel for each user, in which the total reserved bandwidth corresponds to the bandwidth reserved for the whole set of E-DCH.

6. Method for assigning bandwidth in the Call Admission Control of Iub interface according to any of claims 1-3, **characterized in that** it is applied to a channel shared by the N users, in which the total reserved bandwidth corresponds to the reserved bandwidth for said shared channel.

7. Method for assigning bandwidth in the Call Admission Control of Iub interface according to claim 6, **characterized in that** the channel shared by the users is a HSDPA , high-speed downlink pocket access, channel

## Patentansprüche

1. Verfahren zum Zuweisen von Bandbreite in der Anrufannahmesteuerung (Call Admission Control) einer Iub-Schnittstelle, das das Zuweisen einer gesamten Bandbreitenreserve gemäß einer nichtlinearen Funktion in Abhängigkeit von der Anzahl N von Benutzern beinhaltet, **dadurch gekennzeichnet, dass** die nichtlineare Funktion eine logarithmische Funktion ist.

2. Verfahren zum Zuweisen von Bandbreite in der Anrufannahmesteuerung einer Iub-Schnittstelle nach Anspruch 1, **dadurch gekennzeichnet, dass** die angewandte logarithmische Funktion die Folgende ist:

$$Reserved\_BW = One\_user\_BWres * log\ (N^{slopeFactor}+9)$$

wobei:

- *Reserved_BW* die gesamte Bandbreitenreserve ist;
- *One_user_BWres* die Bandbreitenreserve ist, wenn sich nur ein Benutzer im System befindet;
- *N* die Anzahl der Benutzer ist;
- *slopeFactor* ein Faktor zum Regeln der inkrementalen Reservierung ist, solange mehr Benutzer in das System eintreten.

3. Verfahren zum Zuweisen von Bandbreite in der Anrufannahmesteuerung einer Iub-Schnittstelle nach Anspruch 1, **dadurch gekennzeichnet, dass** die nichtlineare Funktion einer Tabelle entspricht, die die Benutzerzahl auf die gesamte Bandbreitenreserve bezieht.

4. Verfahren zum Zuweisen von Bandbreite in der Anrufannahmesteuerung einer Iub-Schnittstelle nach einem der vorherigen Ansprüche, **dadurch gekennzeichnet, dass** es auf PS DCH angewandt wird, einem packetgeschalteten dedizierten Kanal für jeden Benutzer, wobei die gesamte Bandbreitenreserve der für den gesamten Satz von PS DCH reservierten Bandbreite entspricht.

5. Verfahren zum Zuweisen von Bandbreite in der Anrufannahmesteuerung einer Iub-Schnittstelle nach einem der Ansprüche 1-3, **dadurch gekennzeichnet, dass** es auf E-DCH angewandt wird, einem erweiterten dedizierten Kanal für jeden Benutzer, wobei die gesamte Bandbreitenreserve der für den gesamten Satz von E-DCH reservierten Bandbreite entspricht.

6. Verfahren zum Zuweisen von Bandbreite in der Anrufannahmesteuerung einer Iub-Schnittstelle nach einem der Ansprüche 1-3, **dadurch gekennzeichnet, dass** es auf einen von den N Benutzern gemeinsam genutzten Kanal angewandt wird, wobei die gesamte Bandbreitenreserve der für den genannten gemeinsam genutzten Kanal reservierten Bandbreite entspricht.

7. Verfahren zum Zuweisen von Bandbreite in der Anrufannahmesteuerung einer Iub-Schnittstelle nach Anspruch 6, **dadurch gekennzeichnet, dass** der von den Benutzern gemeinsam genutzte Kanal ein HSDPA-(High-Speed Downlink Packet Access)-Kanal ist.

**Revendications**

1. Procédé destiné à attribuer une bande passante au contrôle d'admission d'appels d'une interface Iub, comprenant l'attribution d'une bande passante réservée totale, sur la base d'une fonction non linéaire subordonnée au nombre d'utilisateurs N, **caractérisé en ce que** la fonction non linéaire est une fonction logarithmique.

2. Procédé destiné à attribuer une bande passante au contrôle d'admission d'appels d'une interface Iub selon la revendication 1, **caractérisé en ce que** la fonction logarithmique utilisée est la suivante :

$$Reserved\_BW = One\_user\_BWres * log\ (N^{slopeFactor}+9)$$

dans laquelle :

- *Reserved_BW* représente la bande passante réservée totale ;
- *One_user_BWres* représente la bande passante réservée lorsqu'il n'existe qu'un seul utilisateur dans le système ;
- *N* représente le nombre d'utilisateurs ;
- *slopeFactor* représente un facteur visant à contrôler la réserve incrémentielle tant que davantage d'utilisateurs entrent dans le système.

**3.** Procédé destiné à attribuer une bande passante au contrôle d'admission d'appels d'une interface lub selon la revendication 1, **caractérisé en ce que** la fonction non linéaire correspond à un tableau lequel met en corrélation le nombre d'utilisateurs et la bande passante totale ayant été réservée.

**4.** Procédé destiné à attribuer une bande passante au contrôle d'admission d'appels d'une interface lub selon l'une quelconque des revendications précédentes, **caractérisé en ce qu'**il est appliqué à un canal dédié à commutation par paquets, PS DCH, pour chaque utilisateur, dans lequel la bande passante réservée totale correspond à la bande passante réservée pour la totalité de l'ensemble de PS DCH.

**5.** Procédé destiné à attribuer une bande passante au contrôle d'admission d'appels d'une interface lub selon l'une quelconque des revendications 1 à 3, **caractérisé en ce qu'**il est appliqué à un canal dédié amélioré, E-DCH, pour chaque utilisateur, dans lequel la bande passante réservée totale correspond à la bande passante réservée pour la totalité de l'ensemble d'E-DCH.

**6.** Procédé destiné à attribuer une bande passante au contrôle d'admission d'appels d'une interface lub selon l'une quelconque des revendications 1 à 3, **caractérisé en ce qu'**il est appliqué à un canal partagé par les N utilisateurs, dans lequel la bande passante réservée totale correspond à la bande passante réservée pour ledit canal partagé.

**7.** Procédé destiné à attribuer une bande passante au contrôle d'admission d'appels d'une interface lub selon la revendication 6, **caractérisé en ce que** le canal partagé par les utilisateurs est un canal à accès descendant à haute vitesse en mode paquets, HSDPA.

**FIG. 1**

Lineal distribution function

Number of HSDPA connections

Reserved capacity for the all HSDPA connections

**FIG. 2A**

Logarithmic distribution function

Number of PS DCH connections

Reserved capacity for the whole set of PS DCH connections

**FIG. 2B**

Logarithmic distribution function

Number of HSDPA connections

Reserved capacity for the HSDPA channel

| Number of users | ReservedBW for all PS DCH (Kbps) | ReservedBW for HSDPA (Kbps) |
|---|---|---|
| 0 | 0 | 0 |
| 1 | X | A |
| 2 | Y | B |
| ... | ... | ... |
| N | Z | D |

FIG. 3

EP 2 178 326 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6233223 B1
- US 6909690 B1